Europäisches Patentamt

European Patent Office

Office européen des brevets

(11) Veröffentlichungsnummer: **0 262 299**
**A2**

(12) **EUROPÄISCHE PATENTANMELDUNG**

(21) Anmeldenummer: **87107375.5**

(51) Int. Cl.4: **C04B 35/48**

(22) Anmeldetag: **21.05.87**

(30) Priorität: **24.09.86 DE 3632409**

(43) Veröffentlichungstag der Anmeldung:
**06.04.88 Patentblatt 88/14**

(84) Benannte Vertragsstaaten:
**AT BE CH DE ES FR GB GR IT LI LU NL SE**

(71) Anmelder: **DIDIER-WERKE AG**
**Lessingstrasse 16-18**
**D-6200 Wiesbaden(DE)**

(72) Erfinder: **Elstner, Ingo, Dr.**
**Augustastrasse 2B**
**D-6200 Wiesbaden(DE)**
Erfinder: **Leistner, Hans, Dr.**
**Am Hermannsberg 9**
**D-6200 Wiesbaden(DE)**

(74) Vertreter: **Brückner, Raimund, Dipl.-Ing.**
**c/o Didier-Werke AG Lessingstrasse 16-18**
**D-6200 Wiesbaden(DE)**

(54) Verfahren zur Herstellung gebrannter Formkörper aus nicht oder nur gering stabilisiertem Zr02 und nach dem Verfahren hergestellte Formkörper.

(57) Die Erfindung betrifft ein Verfahren zur Herstellung gebrannter Formkörper aus nicht oder nur gering stabilisiertem $ZrO_2$.

Das erfindungsgemäße Verfahren ist dadurch gekennzeichnet, daß der grüne Formkörper bei einem Sauerstoffpartialdruck von maximal $10^{-6}$ bar gebrannt wird.

EP 0 262 299 A2

## Verfahren zur Herstellung gebrannter Formkörper aus nicht oder nur gering stabilisiertem $ZrO_2$ und nach dem Verfahren hergestellte Formkörper

Die Erfindung betrifft ein Verfahren zur Herstellung gebrannter Formkörper aus nicht oder nur gering stabilisiertem $ZrO_2$, sowie nach dem Verfahren hergestellte Formkörper.

Formkörper aus Zirkoniumdioxid, $ZrO_2$, werden zunehmend in der Hochtemperaturtechnologie verwendet. Zirkoniumdioxid liegt bei Zimmertemperatur in monokliner Phase vor und wandelt sich beim Erhitzen auf höhere Tempeatur in die tetragonale Phase bzw. die kubische Phase um, wobei diese Umwandlungen von Volumenänderungen begleitet sind. Bei nichtstabilisierten Formkörpern aus $ZrO_2$ erfolgt beim Brennen die Umwandlung der bei Zimmertemperatur stabilen monoklinen Phase in die tetragonale Phase. Beim Abkühlen eines solchen nichtstabilisierten Formkörpers aus $ZrO_2$ wandelt sich die tetragonale Phase bis zu 100 % wieder in die monokline Phase um, wobei der Formkörper dann viele Risse bekommt oder auch in Einzelstücke zerfallen kann.

Weiterhin ist es bereits bekannt, Formkörper aus sogenanntem teilstabilisiertem Zirkoniumdioxid herzustellen, wobei dieses teilstabilisierte Zirkoniumdioxid beispielsweise aus 94 bis 97 Gew.-% $ZrO_2$ sowie 2 bis 4 Gew.-% CaO, MgO oder $Y_2O_3$ als Stabilisatoren neben den als Restbestandteil vorhandenen üblichen Verunreinigungen in Form von $SiO_2$, $Al_2O_3$, $Fe_2O_3$ und/oder $TiO_2$ bestehen kann. Ein solches teilstabilisiertes $ZrO_2$ wandelt sich beim Brennen von der monoklinen Phase in die tetragonale und kubische Phase um, wobei beim Abkühlen die kubische Phase aufgrund der langsamen Entmischungsgeschwindigkeit und die tetragonale Phase gegebenénfalls infolge Druckspannungen metastabil erhalten bleiben, so daß eine geringere oder auch keine Rißbildung auftritt. Die Verwendung von Stabilisatoren kann jedoch nachteilig sein, da hierdurch Mischphasen gebildet werden können, welche die Feuerfestigkeit eines solchen aus teilstabilisiertem Zirkoniumdioxid hergestellten Formkörpers beeinträchtigen können.

Aufgabe der vorliegenden Erfindung ist die Bereitstellung eines Verfahrens zur Herstellung gebrannter Formkörper aus nicht oder nur gering stabilisiertem $ZrO_2$, bei denen beim Abkühlen keine Rißbildung auftritt.

Überraschenderweise wurde nun gefunden, daß bei der Herstellung von gebrannten Formkörpern aus nicht oder nur gering stabilisiertem $ZrO_2$ eine solche Rißbildung der gebrannten Formkörper bei ihrer Abkühlung dadurch vermieden werden kann, daß ein geringer Sauerstoffpartialdruck beim Brennvorgang eingehalten wird.

Das erfindungsgemäße Verfahren zur Lösung der zuvor genannten Aufgabe besteht daher darin, daß der grüne Formkörper bei einem Sauerstoffpartialdruck von maximal $10^{-6}$ bar gebrannt wird.

Gemäß einer bevorzugten Ausführungsform beträgt der Sauerstoffpartialdruck maximal $10^{-8}$ bar. Hierdurch ist der Vorteil gegeben, daß eine Rißbildung der gebrannten Formkörper beim Abkühlen noch weiter vermieden wird.

Gemäß einer weiteren bevorzugten Ausführungsform wird ein Zirkoniumdioxid, $ZrO_2$, mit einer Reinheit von mindestens 99 Gew.-% $ZrO_2$ einschließlich dem üblicherweise zugerechneten $HfO_2$ eingesetzt. $ZrO_2$ mit einer hohen Reinheit weist den Vorteil auf, daß die Anwendungsgrenztemperatur eines aus einem solchen $ZrO_2$ hergestellten gebrannten Formkörpers besonders hoch liegt und daß die tetragonale Phase ohne Vorhandensein von Druckspannungen metastabil erhalten bleibt.

Vorteilhafterweise wird bei dem erfindungsgemäßen Verfahren der maximale Sauerstoffpartialdruck von $10^{-6}$ bar bzw. $10^{-8}$ bar dadurch erreicht, daß ein graphitbeheizter und/oder graphitausgekleideter Ofen verwendet wird oder in dem Ofen ·eine Kohlegriesschüttung vorliegt.

Unter dem gemäß der Erfindung eingesetzten Zirkoniumdioxid, $ZrO_2$, ist das übliche Zirkoniumdioxid zu verstehen, das üblicherweise noch Hafniumoxid, $HfO_2$, entsprechend der natürlich vorkommenden Konzentration in Zirkoniummineralien, die zur Herstellung des $ZrO_2$ verwendet wurden, enthält. Ein üblicher Hafniumwert in einem solchen $ZrO_2$ liegt bei 2 Gew.-%. Das gemäß der Erfindung verwendete $ZrO_2$ kann andere übliche Verunreinigungen enthalten, z.B. $SiO_2$, $Al_2O_3$, $Fe_2O_3$ und/oder $TiO_2$, wobei deren Menge jedoch möglichst gering liegen sollte und üblicherweise 2 Gew.-% und vorteilhafterweise 1,0 Gew.-% nicht übersteigt.

Bei dem erfindungsgemäßen Verfahren wird das $ZrO_2$-Ausgangsprodukt zur Herstellung der grünen Formkörper bevorzugt in Form von Mehl, d.h. mit einer Korngröße $\leq 60$ μm eingesetzt. Dieses $ZrO_2$ Mehl wird mit einem temporären Bindemittel, z.B. Polyvinylalkohol (PVA), zu einem Granulat umgeformt, dieses Granulat wird durch Formpressen bei Drücken bis zu 100 N/mm² zu Formkörpern umgewandelt und bei üblichen Temperaturen, z.B. von 110 °C bis 180 °C, zu den grünen Formörpern getrocknet.

Gemäß der Erfindung werden diese grünen Formkörper dann in einem geeigneten Ofen unter einer Inertgasatmosphäre oder Schutzgasatmosphäre, wobei ein Sauerstoffpartialdruck von maximal $10^{-6}$ bar eingehalten wird, gebrannt.

Die übliche Brenndauer für Formkörper üblicher Abmessungen liegt zwischen 1 h und 4 h. Als Schutzgas kann beispielsweise ein Gemisch aus Stickstoff und Wasserstoff, z.B. Formiergas, verwendet werden, d.h. ein Gas mit einem Verhältnis $N_2 : H_2 = 8/1$.

Statt eines Schutzgases kann auch ein übliches Inertgas, z.B. Argon oder ein Stickstoff verwendet werden, ebenso ist die Verwendung von Kohlenmonoxid oder Mischungen aus Kohlenmonoxid/Kohlendioxid möglich. Weiterhin kann der gewünschte Sauerstoffpartialdruck durch Evakuieren erreicht werden.

Die Formkörper werden in der Brennatmosphäre abgekühlt, d.h. beim Abkühlen wird ebenfalls ein Sauerstoffpartialdruck von maximal $10^{-6}$ bar eingehalten.

Die nach dem erfindungsgemäßen Verfahren hergestellten Formkörper sind, sofern sie bei ihrem Einsatz bei hohen Temperaturen mit einer oxidierenden Atmosphäre in Berührung kommen, nur für Anwendungen geeignet, bei denen sie einmal aufgeheizt werden.

Die nach dem erfindungsgemäßen Verfahren hergestellten Formkörper können z.B. verwendet werden für: Vergießen von Stahl oder als Maschinenbauteile.

Die nach dem erfindungsgemäßen Verfahren hergestellten gebrannten Formkörper besitzen eine besonders hohe Temperaturschockbeständigkeit und Biegefestigkeit und zeichnen sich vor allem durch geringe Korngrößen aus.

Die Eigenschaftswerte von nach dem erfindungsgemäßen Verfahren hergestellten gebrannten Formkörpern sind in der folgenden Tabelle zusammengestellt:

TABELLE

| Stabilisator- gehalt (Gew.-%) MgO | Rohdichte $(g/cm^3)$ | Biegefestigkeit $(N/mm^2)$ | % an tetragonaler Phase | |
|---|---|---|---|---|
| | | | am unversehrten Bauteil | am Pulver |
| 0 | 4,60 | 30 | 55 | Spuren |
| 0 | 5,20 | 140 | 50 | " |
| 1 | 5,40 | 210 | 65 | 15 |
| 2 | 5,50 | 220 | 90 | 50 |

Die gebrannten Formkörper weisen am unversehrten Bauteil in vorteilhafter Weise einen hohen Anteil an metastabiler tetragonaler Phase auf. Durch die Zerkleinerung des unversehrten Bauteil zu Pulver nimmt die tetragonale Phase ab und es bildet sich wieder die monokline Phase.

Das gemäß der Erfindung verwendete, gering stabilisierte $ZrO_2$ kann Stabilisatorengehalte bis zu 2 Gew.-% und vorzugsweise $\leq$ 1 Gew.-% aufweisen. Als Stabilisatoren können die üblichen Stabilisatorzusätze wie $Y_2O_3$, $CaO$, $MgO$ sowie seltene Erden vorkommen.

**Ansprüche**

1. Verfahren zur Herstellung gebrannter Formkörper aus nicht oder nur gering stabilisiertem $ZrO_2$, dadurch gekennzeichnet, daß der grüne Formkörper bei einem Sauerstoffpartialdruck von maximal $10^{-6}$ bar gebrannt wird.

2. Verfahren nach Anspruch 1, dadurch gekennzeichnet, daß ein Sauerstoffpartialdruck von maximal $10^{-8}$ bar angewandt wird.

3. Verfahren nach Anspruch 1, dadurch gekennzeichnet, daß ein Sauerstoffpartialdruck angewandt wird, wie er in einem graphitbeheizten und/oder graphitausgekleidetem Ofen vorherrscht.

4. Verfahren nach Anspruch 1, dadurch gekennzeichnet, daß ein Sauerstoffpartialdruck angewandt wird, wie er in einer Kohlegriesschüttung vorherrscht.

5. Verfahren nach einem der vorhergehenden Ansprüche, dadurch gekennzeichnet, daß ein $ZrO_2$ mit einer Reinheit von mindestens 99 Gew.-% $ZrO_2$ + $HfO_2$ eingesetzt wird.

6. Gebrannter Formkörper aus nicht oder nur gering stabilisiertem $ZrO2$, hergestellt nach dem Verfahren nach einem der Ansprüche 1 bis 5.